Europäisches Patentamt

European Patent Office

Office européen des brevets

(19)

(11) Veröffentlichungsnummer : **0 205 778**
**B1**

(12) **EUROPÄISCHE PATENTSCHRIFT**

(45) Veröffentlichungstag der Patentschrift :
07.03.90

(21) Anmeldenummer : 86104390.9

(22) Anmeldetag : 01.04.86

(51) Int. Cl.⁵ : **D 21 C  3/00**, D 21 C  11/02,
C 02 F  1/28

(54) **Sulfitaufschlussverfahren zur Herstellung von Zellstoff aus lignozellulosehaltigen Materialien mit Rückgewinnung der Aufschlusschemikalien.**

(30) Priorität : 18.05.85 DE 3518005

(43) Veröffentlichungstag der Anmeldung :
30.12.86 Patentblatt 86/52

(45) Bekanntmachung des Hinweises auf die Patenterteilung : 07.03.90 Patentblatt 90/10

(84) Benannte Vertragsstaaten :
AT CH DE FR LI SE

(56) Entgegenhaltungen :
DE--A-- 2 239 362
FR--A-- 2 184 628
FR--A-- 2 459 326
US--A-- 3 236 589
US--A-- 3 711 593
US--A-- 4 134 786
TAPPI JOURNAL, Band 65, Nr. 10, Oktober 1982, Seite 29, Atlanta, Georgia, US; "Benefits of solvent-sulfite pulping"
TAPPI JOURNAL, Band 66, Nr. 7, Juli 1983, Seiten 47-50, Atlanta, Georgia, US; C.J. DAVIES et al.: "Recovering chemicals in a closed sulfite mill"
idem

(73) Patentinhaber : **Kraftanlagen AG.**
**Im Breitspiel 7**
**D-6900 Heidelberg 1 (DE)**

(72) Erfinder : **Patt, Rudolf, Prof. Dr.**
**Lohbrügger Strasse 3a**
**D-2057 Reinbek (DE)**
Erfinder : **Kordsachia, Othar, Dr.**
**Ziegeleistrasse 49 b**
**D-2000 Oststeinbek (DE)**

(74) Vertreter : **Helber, Friedrich G., Dipl.-Ing. et al**
**Giesser Weg 47**
**D-6144 Zwingenberg (DE)**

EP 0 205 778 B1

## Beschreibung

Die Erfindung betrifft ein Sulfitaufschlußverfahren zur Herstellung von Zellstoff aus lignozellulosehaltigen Materialien mit Rückgewinnung der Aufschlußchemikalien, unter Reihenschaltung des Kochvorgangs, des Ausblasens, der Stoffwäsche und gegebenenfalls der Bleiche, mit einer mehrfachen thermischen Behandlung der Ablauge zur Rückgewinnung der Aufschlußchemikalien unter Verwendung einer wasserlöslichen Monosulfitlösung mit einem Zusatz von Methanol als mindestens ein niedrig siedendes, organisches Lösungsmittel und einem Chinonderivat als mindestens eine als Redoxkatalysator geeignete Verbindung.

Die Hauptverfahren der Zellstoffgewinnung, das Sulfat- und das Sulfitverfahren, sind mit erheblichen Nachteilen behaftet. Unter Bezug auf die gewonnenen Zellstoffmengen steht weltweit das Sulfatverfahren im Vordergrund, da es auf alle lignocellulosehaltigen Materialien anzuwenden ist und der hergestellte Zellstoff gute technologische Eigenschaften aufweist. Einen wesentlichen Nachteil bedeuten bei diesem Verfahren die anfallenden geruchsintensiven reduzierten Schwefelverbindungen und die damit verbundenen Belastungen der Umgebungsluft einerseits und die schwierige Bleichbarket, verbunden mit erheblichen Abwasserbelastungen andererseits. Sulfitzellstoffen sind demgegenüber eine leichtere Bleichbarkeit aufgrund des deutlich niedriger liegenden Restligningehalts und eine bessere Löslichkeit des im Zellstoff vorhandenen Restlignins zu eigen. Für Sulfitzellstoffe sind jedoch die einzusetzenden Rohstoffe begrenzt, bedürfen einer saubereren Entrindung des Holzes wegen des unvollständigen Aufschlusses der Rinde und damit verbundener Verunreinigung des Zellstoffes, und die technologischen Eigenschaften der Zellstoffe liegen deutlich unterhalb derjenigen der Sulfatverfahren.

Bei den bekannten Sulfitaufschlußverfahren von Holz oder Einjahrespflanzen zur Zellstoffgewinnung werden unter saurer bzw. neutraler Einstellung der Kochsäure die lignocellulosehaltigen Materialien mit Lösungen von Hydrogensulfiten oder Sulfiten gekocht. Verfahren, deren Hydrogensulfitlösungen zusätzlich Schwefeldioxid enthalten, werden hierbei als saure Bisulfitverfahren bezeichnet. Unter diesen Sulfitaufschlußverfahren hat das Magnesiumbisulfitverfahren als Alternative zum Kalziumbisulfitverfahren erheblich an Bedeutung gewonnen, nachdem hierbei die aus den Feuerungsabgasen der Dicklaugenverbrennung ausgewaschenen Verbindungen Magnesiumoxid und Schwefeldioxid zur Herstellung neuer Kochsäuren zu verwenden sind. Einem dem Zellstoffaufschluß angeschlossenen Kochsäurekreislauf sind somit nur mehr geringe Mengen an Chemikalien entsprechend den auftretenden Verlusten an geeigneter Stelle des Kreislaufs zuzugeben. Gegenüber dem Kalziumbisulfitverfahren entfallen zugleich die aufwendigen Säuretürme zur Herstellung der benötigten Kochsäure und durch die Auswaschung des Schwefeldioxids aus den Abgasen der Dicklaugenverbrennung wird ein wesentlicher Teil der Gesamtschwefeldioxidemission vermieden.

Eine grundlegende Definition der verschiedenen Sulfitaufschlußverfahren wurde von Ingruber und Allard (1973) gegeben, die heute allgemein anerkannt wird (Ingruber, O.V. u. Allard, G.A., Alkaline Sulfite Pulping for Kraft Strength, Pulp and Paper Magazine of Canada 1974 (1973), p. 354-369/Technical paper T 354, Nr. 11, p. 84-89).

Hiernach setzt sich eine alkalische Sulfitaufschlußlösung aus einem Sulfit und Karbonaten oder Laugen zusammen. Der Einsatz aller bekannter Sulfitaufschlußverfahren ist je für sich im wesentlichen abhängig von der Holzart, also dem eingesetzten Rohstoff. Hierbei sind bezogen auf den Zellstoffaufschluß für Ausbeute und Festigkeitseigenschaften unterschiedliche Ergebnisse erzielbar. Gleiches gilt für die Möglichkeit der Rückgewinnung der Aufschlußchemikalien.

Es ist ein Sulfitaufschlußverfahren bekannt, bei dem für den Aufschluß eine wasserlösliche Natrium-Sulfitlösung unter Zusatz von Methanol und Anthrachinon eingesetzt wurde (Tappi-Journal, Bd. 65, Nr. 10/1982, S. 29). Diese Veröffentlichung vermittelt für den Fachmann die Lehre zur Erhöhung der Delignifizierungs-Geschwindigkeit eine Natriumsulfitlösung, also eine reine Monosulfitlösung zu wählen und dieser Kochflüssigkeit zur Erhöhung der Aufschlußeffizienz Methanol und/oder Anthrachinon zuzusetzen. Hierbei wurden vorwiegend saure Systeme untersucht und des weiteren auch ein in der Veröffentlichung irreführend als « Alkaline sulfite system » bezeichnetes Verfahren mit einer reinen Natriumsulfitlösung, das nach der in der oben erwähnten von Ingruber und Allard gegebenen Definition den Neutralsulfitverfahren zuzuordnen ist, in die Untersuchungen einbezogen. Für den gemeinsamen Zusatz von Methanol und Anthrachinon zu dieser Natriumsulfitlösung wurden nur unwesentliche Verbesserungen der Aufschlußeffizienz erzielt. Als Schlußfolgerung wird mitgeteilt, daß es zweckmäßiger ist, sauren Systemen Methanol zuzusetzen. Die reinen Natriumsulfitlösungen, die diesen Untersuchungen von Bublitz und Hull zugrunde gelegt wurden, sind speziell für die Herstellung von chemo-, thermomechanischen Holzstoffen (CTMP) aus Nadelhölzern bekannt und lassen eine Ausbeute von über 90 % erzielen. Der Zusatz von Anthrachinon und Methanol führt zu den herausgestellten unwesentlich verbesserten Aufschlußergebnissen.

Um die Zellstoffherstellung umweltfreundlicher und kostengünstiger zu gestalten, wurde bereits vorgeschlagen, Anthrachinon in alkalischen Aufschlußprozessen der Kochlösung zuzusetzen. Das Anthrachinon beschleunigt in alkalischen Aufschlußprozessen als Redoxkatalysator die Delignifizierung und stabilisiert die reduzierenden Enden der Kohlenhydrate gegen ein alkalisches Peeling- off. Zellstoffe mit höheren Ausbeuten und besseren Festigkeitseigenschaften sind die Folge. Des weiteren ist durch Einsatz von Anthrachinon auch das schwefelfreie Sodaverfahren zur Herstellung von Vollzellstoffen zu

2

nutzen (Holton, H.H. and F.L. Chopman : Kraft Pulping with Anthraquinone : Laboratory and Full-Scale Mill Trials. TAPPI 60, 11, 49-53 (1977)).

Des weiteren wurden aufgrund der Entdeckung der Wirkungsweise des Anthrachinons gleichfalls schon Untersuchungen durchgeführt, alkalische Sulfitverfahren zur Herstellung von Zellstoffen einzusetzen. Ein Nachteil dieses bekannten Verfahrens besteht jedoch darin, daß ein Restligningehalt von Kappazahl 40 nicht zu unterschreiten und gleichzeitig die Anforderungen hinsichtlich Zellstoffausbeute und -qualität einzuhalten sind. Die Herstellung von Zellstoffen mit hohem Restligningehalt steht jedoch im Gegensatz zu den Bestrebungen, durch verstärkte Delignifizierung im Aufschluß die Bleiche in ihrer ligninentfernenden Funktion zu entlasten und die Umweltbelastung durch Bleichabwässer herabzusetzen (Ingruber, O.V., M. Stradal and J.A. Histed : Alkaline Sulfite-Anthraquinone Pulping of Eastern Canadian Woods. Pulp Paper Mag. Can. 83, no. 12, 79-88, Dec. 1982 (T 342-349) — Kettunen, J., N.E. Virkola and I Yrjälä : The Effect of Anthraquinone on Neutral Sulfite an Alkaline Sulfite Cooking of Pine. Paperi ja Puu 61, no. 11, 685-700, Nov. 1979 — Raubenheimer, S. und H. Eggers : Zellstoffkochung mit Sulfit und Anthrachinon, Papier 34, Nr. 10 A, V19-V23, Nov. 1980).

Zur Behebung dieses Nachteils wurde ein zweistufiger alkalischer Sulfitaufschluß unter Zugabe von Anthrachinon in der ersten und Zugabe von Schwefeldioxid in der zweiten Stufe zum Vorschlag gebracht, um den Ligningehalt der Zellstoffe weiter zu reduzieren. Nachteilig sind jedoch die langen Aufschlußzeiten, die etwa die doppelte Zeit zu derjenigen der Sulfatverfahren in Anspruch nehmen und der hohe technologische Aufwand durch die zweistufige Ausgestaltung des Verfahrens (Patt, R. und B. Beck : Integrale Holznutzung bei alkalischen Sulfitverfahren unter Zusatz von Anthrachinon. Mitt. Bundesforschungsanstalt für Forst- und Holzwirtschaft, Hamburg Nr. 146, 1984, 222-233).

Bekannt ist auch ein Vorschlag, Holz mit einem Alkohol-Wasser-Gemisch aufzuschließen. Der Nachteil dieses Vorschlags ist jedoch, daß gerade die Lösung des Lignins von Nadelhölzern nur in beschränktem Umfang möglich ist. Des weiteren haben die mit noch relativ hohem Restligningehalt erzeugten Zellstoffe unbefriedigende technologische Eigenschaften und der im Aufschluß sich einstellende Druck führt in großtechnischem Maßstab zu erheblichen Problemen (Kleinert, T.N. : Organosolv Pulping with Aqueous Alcohol. TAPPI 57, 99-102, 1974).

In Weiterentwicklung der vorstehenden Lösung wurde deshalb vorgeschlagen, den organischen Lösungsmitteln in Form niederer Alkohole anorganische Aufschlußmittel zuzusetzen. Hierzu wurde vorgeschlagen, neben Methanol oder Äthanol Natronlauge einzusetzen und der Aufschlußlösung zusätzlich Anthrachinon zuzumischen. Der Nachteil dieses Verfahrens, das sich noch in der Entwicklung befindet, liegt jedoch in den erforderlichen hohen Aufschlußtemperaturen und -drücken, der schwierigen Bleichbarkeit der erhaltenen Zellstoffe sowie des hohen Aufwandes für eine Chemikalienrückgewinnung, die entweder durch Elektrolyse oder durch Verbrennung der Ablauge und anschließende Kaustizierung der Grünlauge durchzuführen ist (Edel, E. : Das MD-Organosolv-Zellstoffverfahren. Deutsche Papierwirtschaft 1, 39-45, 1984 — Nakano, J., H. Daima, S. Hosya and A. Ishizu : Studies on Alkali — Methanol Cooking. Ekman Days Stockholm, 2, 72-77, 1981).

Zur Aufbereitung von Ablaugen aus Sulfitverfahren wurde bereits vorgeschlagen, zunächst eine pH-Wertabsenkung durch Rückleiten von Kohlendioxid in die Ablauge und nachfolgend eine Absorption $SO_2$-haltiger Abgase aus der Kokstrocknung in der Restflüssigkeit aus einer Entspannung der Verkokungsabgase vorzunehmen, des weiteren schließlich die hierdurch $SO_2$-haltige Restflüssigkeit zu kaustifizieren und zu klären, um Lauge in den Zellstoffkocher und Klärschlamm nach einer Filtration in den Kalkofen zurückzuführen (FR-A-2 184 628).

Ein weiteres bekanntes Verfahren zur Rückgewinnung der Kochchemikalien vermittelt andererseits die Lehre, den Schwefel aus dem Pyrolysegas als Schwefelwasserstoff vor einer Verbrennung zurückzugewinnen oder aber den Schwefel aus einer wässrigen Lösung der Rückstände einer Pyrolyse zu extrahieren. Durch das Zerstäuben der flüssigen Lauge innerhalb eines Laugenturms bei hohen Temperaturen erfolgt ein vollständiger, schneller Umsatz von Kohlenstoff zu Kohlendioxid und -monoxid (US-A-3236589). Der feste Rückstand dieser Pyrolyse besteht aus Mischungen von Natriumsulfaten und -sulfiten, so daß ein vollständiger Umsatz zu Natriumkarbonat und Schwefelwasserstoff nicht erzielbar ist. Hiervon abweichend wird beim erfindungsgemäßen Verfahren die Ablauge durch Eindampfen konzentriert, nachfolgend karbonatisiert und der feste Rückstand der Karbonatisierung zur Trennung des Karbonats vom Kohlenstoff entlaugt. Das erhaltene Karbonat wird der Sulfitierung und der Kohlenstoff einem Kessel zur Verbrennung mit den Abgasen der Karbonatisierung zugeführt. Als Oxidationsprodukt der Kesselabgase wird Schwefeldioxid erhalten, welches direkt zur Sulfitierung verwendet wird. Der flüssige Eintrag der Lauge in ein Drehrohr zur Karbonatisierung führt zu verlängerten Reaktionszeiten bei niedrigen Temperaturen mit einem vollständigen Umsatz der Lauge zu Karbonat und Kohlenstoff als festem Rückstand. Als gasförmiges Produkt der Karbonatisierung im Drehrohr wird Schwefelwasserstoff freigesetzt, eine Reaktion mit dem Natrium vermieden und damit der feste Rückstand der Karbonatisierung schwefelfrei erhalten.

Bewährte Verfahren zur Rückgewinnung der Kochchemikalien aus einem Natriumsulfitaufschluß arbeiten mit einer pyrolytischen Zersetzung der eingedickten Ablauge unter bestimmten Temperatur- und Sauerstoffbedingungen. (Technol., Stockholm (223) : 26 pp (1964) u. Björkman, A., Proc. Iupac/Eucepa Symp. on Recovery of Pulping Chemicals (Helsinki) 1968, pp. 235-265 (Fin. Pulp and Paper Res. Inst. 1969)).

Es wurde auch schon konzentrierte Ablauge unter Auschluß eines Zutritts von Luft oder Sauerstoff fein zerstäubt von oben in einen vertikalen zylindrischen Druckkessel eingeführt, dessen Wandtemperaturen zwischen 700 und 800 °C betrugen, wodurch eine Umwandlung zu fein verteilten Feststoffen in Form von Natriumkarbonat, etwas Glaubersalz und Kohlenstoff erhalten wird. Schwefelnatrium ist hierbei in den festen Rückständen nicht enthalten und die organischen Begleitstoffe werden vergast, wobei der Schwefel der Ablauge in dem Pyrolysegas als Schwefelwasserstoff auftritt. Die heißen Pyrolysegase werden nachfolgend in einem Zyklon von den in diesen enthaltenen Feststoffen getrennt, oxidiert und mit der Frischlauge in Verbindung gebracht. Kohlenstoff aus der Auslaugung des festen Pyrolyserückstandes kann zur weiteren Wärmerückgewinnung verbrannt werden. Ein derartiges Verfahren zur Rückgewinnung der Kochchemikalien ist verhältnismäßig einfach. Schwierigkeiten liegen in der Auswahl eines geeigneten Werkstoffes aufgrund der hohen Korrosivität der entstehenden Reaktionsprodukte (Barclay H.G. Prahacs, S. and Gravel, J.J.O., Pulp and Paper Mag. Can. 65 (12) : T 553 (1964) ; Gauvin, W.H. and Gravel J.J.O. TAPPI 43 (8) : 678/1960).

Schließlich ist ein Verfahren zur Rückgewinnung von Kochchemikalien aus Bisulfitablaugen bekannt, das anstelle eines indirekt Wärme zuführenden Stahlreaktors einen ausgemauerten, direkt mit Abgasen eines Ölbrenners beheizten einsetzt. Die Verweilzeit im Pyrolysereaktor beträgt nur wenige Sekunden, und der in den Ablaugen enthaltene Schwefel wird in Schwefelwasserstoff und die Natriumverbindungen in Natriumkarbonat umgewandelt. Der feste Pyrolyserückstand weist große Mengen Kohlenstoff auf und wird zunächst zur Wärmerückgewinnung durch einen Abhitzekessel geführt und das dabei erhaltene trockene Pulver in einem zweistufigen Abscheider vom Gas getrennt. Die Pyrolysegase werden in einem Wäscher gekühlt, der Wasserdampf abgeschieden, die Gase nachverbrannt und zur Rückgewinnung von Verbrennungswärme durch einen weiteren Abhitzekessel geführt. Die im Abscheider erhaltenen Feststoffe werden mit Wasser gemischt, Natriumkarbonat ausgelaugt und die Natriumkarbonatlösung filtriert, um den Kohlenstoff abzutrennen. Die erhaltene Natriumkarbonatlösung wird mit Schwefeldioxid aus der Nachverbrennung der Pyrolysegase in Verbindung gebracht und zur Kochsäurebereitung verwendet. Probleme bezüglich Materialstärke und -auswahl für den Pyrolysereaktor werden hierbei umgangen. Die direkte Einführung der heißen Abgase des Ölbrenners erfordert die Ausmauerung des Pyrolysereaktors. Nachteilig ist jedoch der hohe Anteil an Kohlenstoff in den festen Pyrolyserückständen. Der Kohlenstoffgehalt kann hierbei nur durch die Wahl hoher Reaktionstemperaturen herabgesetzt werden, was jedoch zu Ablagerungen an den Reaktorwänden führt. Damit ist auch das Auslaugen von Natriumverbindungen gleichbedeutend mit der Rückgewinnung von Kochchemikalien begrenzt (Horntvedt, E., A Sodium-Base Sulfite Recovery Process Based on Pyrolysis, TAPPI 53 (11) : 2147-52, November (1970)).

Der vorliegenden Erfindung liegt die Aufgabe zugrunde, ein Sulfitaufschlußverfahren zur Herstellung von Zellstoff aus lignozellulosehaltigen Materialien zu schaffen, das die Vorteile des Sulfat- und des Sulfitverfahrens gleichermaßen aufweist, hierbei jedoch die mit diesen Verfahren verbundenen Nachteile vermeidet, insbesondere einen hoch aufgeschlossenen Zellstoff aus zellulosehaltigen Materialien unterschiedlicher Herkunft mit hoher Ausbeute und sehr guten Festigkeitseigenschaften zu gewinnen und Wege einer Rückgewinnung der Aufschlußchemikalien aus der Ablauge für einen geschlossenen Chemikalienkreislauf zu öffnen, wobei die Druckführung des Verfahrens auch wirtschaftliche Vorteile gegenüber den aus dem Stand der Technik bekannten Verfahren bringen soll.

Ausgehend von einem Verfahren der eingangs erwähnten Art wird diese Aufgabe erfindungsgemäß dadurch gelöst, daß für den Aufschluß entsprechende Karbonate und/oder Hydroxide bei überwiegendem Anteil an Monosulfitlösung zugesetzt werden. Durch dieses Verfahren werden alle gängigen Rohstoffe für die Zellstoffherstellung einschließlich Rindenanteil in kurzer Zeit zu Zellstoffen mit außergewöhnlich hohen Ausbeuten bei niedrigem Restligningehalt, hohem Weißgrad, leichter Bleichbarkeit und bisher in anderen Prozessen nicht erzielten Festigkeitseigenschaften aufgeschlossen. Durch unterschiedliche Mischungsverhältnisse lassen sich einzelne Eigenschaften des Zellstoffs abhängig von einer bestimmten Holzart positiv beeinflussen. Dieses gilt insbesondere für den Durchschnittspolymerisationsgrad sowie die statischen und dynamischen Eigenschaften der Zellstoffe und vor allem für die Aufschlußdauer. Hierbei ist der Einfluß von Hydroxid stärker als der von Karbonat.

Als besonders zweckmäßig hat sich die Verwendung eines — auf das trockene Pflanzenrohmaterial bezogenen — Anteils von 10-60 %, vorzugsweise 15-30 % niedrig siedender Lösungsmittel in der Aufschlußlösung erwiesen. Extraktstoffe des Holzes in Form von Harzen und Terpenen werden gelöst und damit die Penetration für die Aufschlußmittel verbessert. Zugleich wird die Löslichkeit des eingesetzten Redox-Katalysators gefördert und eine Delignifizierung bewirkt.

Der Redoxkatalysator, insbesondere Anthrachinon oder Anthrahydrochinon, ist für die Förderung der Delignifizierung und gleichzeitigen Stabilisierung der Kohlenhydrate während des Aufschlusses von Bedeutung.

Hierbei werden des weiteren vorteilhaft bezogen auf das eingesetzte trockene Pflanzenmaterial ein Anteil von 0,05 bis 0,5 % insbesondere von 0,1 % des Chinonderivats der Aufschlußlösung zugesetzt. Das Chinonderivat reduziert das Lignin, wird hierbei selbst oxidiert, oxidiert die reduzierenden Endgruppen der Kohlenhydrate und wird dabei selbst wiederum reduziert. Die Endgruppen der Kohlenhydrate werden hierdurch gegen einen alkalischen Abbau stabilisiert. Anthrachinon besitzt eine besonders hohe Wirkung bezüglich der geforderten Eigenschaften. Andererseits zeigt sich hierbei überraschend, daß das Anthrachinon nach dem Aufschluß in fester Form auf der Ablauge schwimmt und hierdurch auf einfachstem Weg abgetrennt und zurückgewonnen werden kann.

(Weiter auf S. 9 ab Zeile 15 ursprünglichen Beschreibung).

Besonders vorteilhaft für den Gesamteinsatz von Kochchemikalien ist ein Verhältnis des trockenen Pflanzenmaterials zur Gesamtaufschlußlösung zwischen 1 : 2 bis zu 1 : 8. In überraschender Weise läßt sich gegenüber zuvor bekannten Verfahren, die mit organischen Aufschlußlösungen arbeiten, nunmehr ein Aufschluß mit niedrigem Flottenverhältnis durchführen, wodurch die Delignifizierung beschleunigt, die Zellstoffausbeute und Festigkeit erhöht und der Energiebedarf des Verfahrens erheblich reduziert wird.

Zur Herabsetzung der Aufschlußzeit auf 30 bis 240 Minuten wird in Abstimmung mit dem Siedepunkt des verwendeten organischen Lösungsmittels und dessen Anteil in der Aufschlußlösung vorteilhaft die Aufschlußtemperatur zwischen 160 und 190 °C gewählt, wobei sich ein Druck zwischen 8 und 16 bar einstellt. Je nach dem eingesetzten Rohstoff, der gewünschten Zellstoffqualität und den gewählten Aufschlußbedingungen ist die Aufschlußzeit zwischen 30-240 Minuten zu wählen.

Durch Rückführung der organischen Lösungsmittel aus dem Kochvorgang und/oder aus der Eindampfung der Ablauge werden Lösungsmittel zurückgewonnen. Die Eindampfung der Ablauge und deren thermischer Abbau in reduzierender Atmosphäre führt zu einem festen Rückstand, aus dem die Alkaliverbindungen der Aufschlußlösung als anorganische Kochchemikalie auf einfachem Weg herauszulösen sind. Zugleich läßt sich auch der Schwefelwasserstoff als das gasförmige Produkt des thermischen Abbaus zu Schwefeldioxid umwandeln, um dieses zur Sulfitierung der aus den festen Produkten des thermischen Abbaus herausgelösten anorganischen Kochchemikalien einzusetzen, wodurch auch der Kreislauf der anorganischen Kochchemikalien unter erneuter Bereitung von Aufschlußlösung geschlossen wird. Die schwefelwasserstoffhaltigen, heizwertreichen Gase können hierzu unter Verwendung vorzugsweise schwefelhaltiger Schweröle als Zusatzbrennstoff in einem Abhitzekessel in Schwefeldioxid umgewandelt und damit der Schwefelverlust im Kreislauf der Kochchemikalien ersetzt werden.

Vorteilhaft für das Herauslösen der Alkaliverbindungen gemeinsam mit dem Kohlenstoff aus den festen Produkten des thermischen Abbaus sowie ihre anschließende Trennung ist ein Auslaugen mittels Wasser. Hierdurch kann in einem anschließenden Verfahrensschritt der begleitende Kohlenstoff vom Alkalicarbonat durch Filtration auf einfachstem Wege abgetrennt werden.

Der durch Filtration aus dem wässrigen Alkalicarbonat abgetrennte Kohlenstoff läßt sich gleichermaßen vorteilhaft dem Brennstoff für die Oxidation der Schwefelverbindungen in den gasförmigen Produkten des thermischen Abbaus der Dicklauge zusetzen oder als Belebungshilfsmittel und Adsorbens in der biologischen Klärung der Bleichereiabwässer verwenden oder aber außerhalb des Prozesses kommerziell verwerten.

Um bei dem thermischen Abbau der Dicklauge eine gleichmäßige Temperaturzuführung und -verteilung zu erzielen, Anbackungen an den Wänden des Reaktors auszuschließen sowie leicht lösliche, feste Produkte zu erhalten, ist die Unterteilung in mehrere Stufen unter Einschluß einer Zerkleinerung, insbesondere unter horizontalem Hauptstoffstrom mit vertikaler Teilkomponente, für eine laufende Umschichtung besonders vorteilhaft.

Der anorganisch und organisch in der Dicklauge gebundene Schwefel läßt sich bei Temperaturen zwischen 500 und 850 °C und Verweilzeiten von 30 bis 120 Minuten in einer reduzierenden Atmosphäre bei niedrigem Druckniveau, geringen Gasgeschwindigkeiten und geringem Staubaustrag sowie geringen Korrosions- und Erosionsauswirkungen innerhalb des Reaktors als Schwefelwasserstoff freisetzen, wobei die Chemikalienverluste besonders gering gehalten werden. Diese Behandlung der Ablauge öffnet zugleich die Möglichkeit, den mechanisch eingedickten Klärschlamm aus der biologischen Reinigung der Bleichereiabwässer unter vollständiger Carbonatisierung darin enthaltener Alkaliverbindungen in den thermischen Abbau einzubeziehen.

Der Einsatz von chlorfreien Bleichmitteln unter Verwendung von Basen, die derjenigen der Aufschlußlösung entsprechen, eröffnet den Weg der Rückführung entsprechender Abwässer in den allgemeinen Ablaugenkreislauf.

Das Verfahren ermöglicht die Errichtung einer abwasserfreien Zellstoffabrik dadurch, daß die Zellstoffe ungewöhnlich weitgehend delignifiziert werden können und bereits im ungebleichten Zustand einen hohen Weißgrad aufweisen. Die Entfernung des noch vorhandenen Restlignins ist mit chlorfreien Bleichmitteln wie Alkali/Sauerstoff, Ozon oder Wasserstoffperoxid möglich. Falls zusätzlich für besonders hohe Weißgradansprüche noch chlorhaltige Bleichmittel eingesetzt werden, kann dies in Form von Chlordioxid in so geringen Mengen geschehen, daß der Chlorspiegel des allgemeinen Ablaugenkreislaufs unterhalb einer kritischen Grenze gehalten werden kann.

Der größte Anteil des für die Aufschlußlösung verwendeten, niedrig siedenden organischen Lösungsmittels wird bereits aus der Entspannung der Ablauge der Kocherei durch Kondensation agbetrennt und über eine Reinigung in einem Stripper frischer Aufschlußlösung erneut zugeführt. Der restliche Anteil des Lösungsmittels gelangt aus der Eindampfung der Ablauge über den Stripper gleichfalls in diesen Lösungsmittelkreislauf. Die Carbonatisierung der organischen und anorganischen Alkaliverbindungen der Dicklauge durch thermischen Abbau unter entsprechenden Temperaturen und Drücken in reduzierender Atmosphäre vermeidet eine unerwünschte Natrium-Thiosulfatbildung und läßt

5

eine gemeinsame Behandlung der Koch- und der Bleichereiabwässer zu, wodurch auch der Wasserkreislauf neben dem Kreislauf der alkoholischen Lösungsmittel und der Alkaliverbindungen für das Verfahren geschlossen wird.

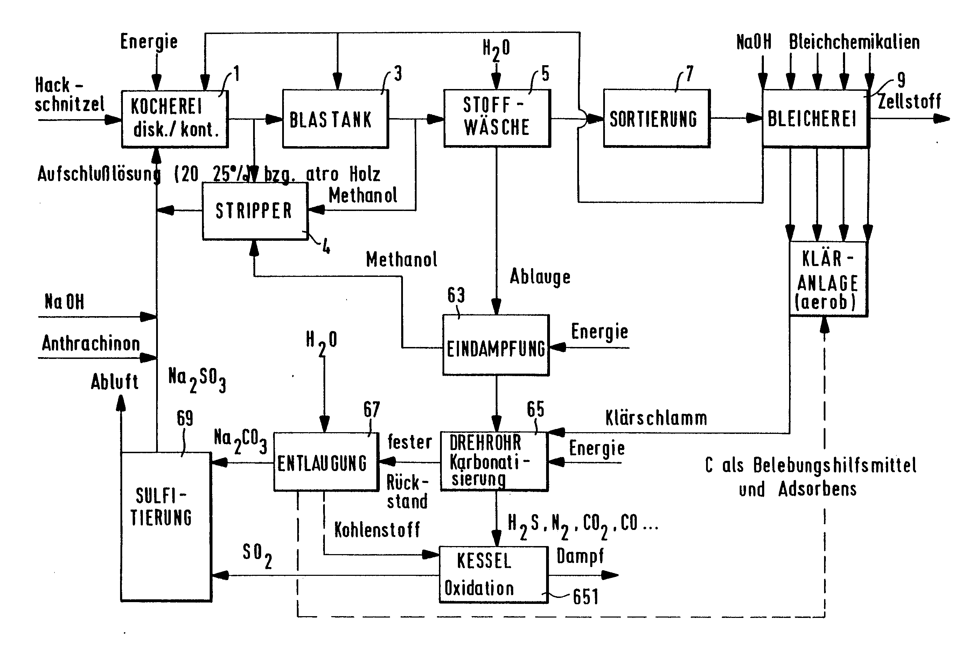

Zur Erläuterung der Erfindungsgedanken ist in der Zeichnung das Verfahren gemäß der Erfindung schematisch dargestellt.

Die Holzhackschnitzel oder Einjahrespflanzen werden der Kocherei 1 zugeführt und in dieser mit einer wasserlöslichen Alkalisulfitlösung als anorganische Aufschlußchemikalie unter Zusatz von Anthrachinon als Redoxkatalysator und Methanol als organische Aufschlußchemikalie zu einem Vollzellstoff aufgeschlossen. Nach Beendigung des Aufschlusses wird der Kocher entspannt und sein Inhalt in den Blastank 3 übergeführt. Durch das Entspannen wird der überwiegende Anteil des organischen Lösungsmittels der Aufschlußlösung frei, anschließend kondensiert, in einem Stripper 4 gereinigt, wodurch der größte Teil des organischen Lösungsmittels zurückgewonnen wird, um dieses in die zur Kocherei geführte frische Aufschlußlösung erneut einzuleiten. Die Ablauge wird in einer Stoffwäsche 5 unter Wassereinleitung und Wärmezufuhr vom Zellstoff abgetrennt. Der abgetrennte Zellstoff gelangt über die Sortierung 7 in die Bleicherei 9. Die Ablauge aus der Stoffwäsche 5 wird einer mehrstufigen Eindampfung 63 zugeleitet, während die Ablaugen der Alkalistufe der Zellstoffbleiche 9 in den allgemeinen Ablaugenkreislauf über die Kocherei 1 und den Blastank 3 zurückgeführt werden. Ein Methanolrest wird aus der Eindampfung in den Stripper 4 gleichfalls eingeleitet. Die aus der letzten Stufe der Eindampfung abgezogene Dicklauge wird einem Drehrohr 65 zugeführt, in dem die Karbonatisierung in reduzierender Atmosphäre unter indirekter Beheizung durchgeführt wird. Die Verweilzeit im Drehrohrofen richtet sich vor allem nach dem Wassergehalt der zugeführten Lauge. Der feste Rückstand der Karbonatisierung wird einer Entlaugung 67 zur Auswaschung des Karbonats zugeleitet. Aus der Entlaugung werden das Karbonat und Wasser in die Sulfitierung 69 übergeführt. Das in der Sulfitierung hergestellte Alkali-Sulfit wird entsprechend dem in den einzelnen Verfahrensstufen auftretenden Chemikalienverlust mit frischer Lauge und Redoxkatalysator unter Einschluß des rückgeführten organischen Lösungsmittelanteils zur Aufschlußlösung ergänzt und der Kocherei erneut zugeleitet. Die gasförmigen Produkte der Karbonatisierung der Dicklauge im Drehrohr 65 werden einem Abhitzekessel 651 zugeleitet, um unter Energierückgewinnung bei Temperaturen zwischen 900 und 1 200 °C diese gemeinsam mit dem aus der Entlaugung 67 ausfiltrierten Kohlenstoff als Zusatz nachzuverbrennen. Im Abhitzekessel wird der Schwefelwasserstoff als gasförmiger Anteil des thermischen Abbaus, der Karbonatisierung der Dicklauge, zu Schwefeldioxid oxidiert. Das erhaltene Schwefeldioxid wird zur Umwandlung des Karbonats in der Sulfitierung eingesetzt, wodurch der Kreislauf der Chemikalienrückgewinnung geschlossen wird.

## 1. Beispiel

In einem 7 Liter-Drehautoklaven wurden 1 200 g (500 g atro) Kiefernhackschnitzel mit einer alkalischen Sulfitlösung mit einem Anfangs-pH-Wert von 13,6 bei einem Gesamt-Flottenverhältnis von 4 : 1 und einem Wasser/Methanol-Verhältnis von 65 : 35 Gewichtsprozenten aufgeschlossen. Der Chemikalieneinsatz, berechnet als NaOH, betrug 25 % bezogen auf atro Holzeinsatz, wovon 80 % als Natriumsulfit und 20 % als Natriumhydroxid eingesetzt wurden. Dieser Aufschlußlösung wurden vor dem Einfüllen in den Zellstoffkocher 0,2 % Anthrachinon/atro Holz zugesetzt. Die Aufheizzeit bis zur maximalen Temperatur von 175 °C, entsprechend einem Druck von 13,5 bar, betrug 80 min. Die Aufschlußdauer bei Maximaltemperatur betrug für Kochung 1 a 150 min und für Kochung 1 b 180 min und der Kocher wurde anschließend abgeblasen ; Abblaszeit ca. 40 min. Für einen derart erzeugten Zellstoff wurden nach Wasserwäsche und aufschlagen in Laborpulper folgende Kenndaten erhalten :

|  | Kochung 1 a | Kochung 1 b |
|---|---|---|
| Gesamtausbeute (%) | 50 | 49,5 |
| Splitteranteil (%) | 0,5 | 0,3 |
| Kappazahl | 24,7 | 22,8 |
| Weißgrad (% ISO) | 53,4 | 54,8 |
| $DP_w$ | 4582 | 5066 |
| Mahlgrad nach 30 min | | |
| Jokro (°SR) | 26 | 25 |
| Reißlänge (m) | 12110 | 12200 |
| Durchreißfestigkeit (cN) | 93,2 | 99,2 |
| Berstfläche (m²) | 88 | 88,6 |

## 2. Beispiel

Der Aufschluß der Kiefernhackschnitzel wurde entsprechend Beispiel 1 b (Aufschlußdauer 180 min bei Maximaltemperatur) durchgeführt, jedoch abweichend der NaOH-Anteil in der Aufschlußlösung entweder zur Hälfte (Kochung 2 a Chemikalienzusammensetzung 80/10/10) oder vollständig (Kochung 2 b : 80/0/20) durch Natriumcarbonat ersetzt, wodurch sich der Anfangs-pH der Aufschlußlösung auf 13,2 bzw. 12,2 erniedrigt.

Für den auf diese Art erzeugten Zellstoff wurden folgende Analysedaten ermittelt :

|  | Kochung 2 a | Kochung 2 b |
|---|---|---|
| Gesamtausbeute (%) | 50,2 | 51,7 |
| Splitteranteil (%) | 0,7 | 1,0 |
| Kappazahl | 24,8 | 29,5 |
| Weißgrad (% ISO) | 52,1 | 54,7 |
| $DP_w$ | 4181 | 4118 |
| Mahlgrad nach 30 min |  |  |
| Jokro (°SR) | 22,0 | 23,0 |
| Reißlänge (m) | 11710 | 11910 |
| Durchreißfestigkeit (cN) | 93,2 | 92,1 |
| Berstfläche (m²) | 82,1 | 80,5 |

## 3. Beispiel

Industriell erzeugte Buchenholzhackschnitzel wurden unter den gleichen Bedingungen wie in Beispiel 1 zur Zellstoffgewinnung eingesetzt, jedoch die Aufschlußdauer bei Maximaltemperatur von 175 °C auf 120 min begrenzt. Es wurden folgende Ergebnisse erzielt :

| | |
|---|---|
| Ausbeute (%) | 51,7 |
| Splitteranteil (%) | 1,6 |
| Kappazahl | 12,2 |
| Weißgrad (% ISO) | 60,0 |
| Mahlgrad nach 10 min | |
| Jokro (°SR) | 25 |
| Reißlänge (m) | 8350 |
| Durchreißfestigkeit (cN) | 92,9 |
| Berstfläche (m²) | 60,9 |

## 4. Beispiel

Mit den Bedingungen nach Beispiel 3, jedoch unter Einsatz von Natriumcarbonat an Stelle von NaOH, wurden Birkenholzhackschnitel aufgeschlossen. Hierbei wurden die folgenden Ergebnisse erzielt :

| | |
|---|---|
| Gesamtausbeute (%) | 57,2 |
| Splitteranteil (%) | 3,6 |
| Kappazahl | 22,2 |
| Weißgrad (% ISO) | 63,3 |
| Mahlgrad nach 10 min | |
| Jokro (°SR) | 22 |
| Reißlänge (m) | 11030 |
| Durchreißfestigkeit (cN) | 102,5 |
| Berstfläche (m²) | 84,6 |

## Patentansprüche

1. Sulfitaufschlußverfahren zur Herstellung von Zellstoff aus lignozellulosehaltigen Materialien mit Rückgewinnung der Aufschlußchemikalien, unter Reihenschaltung des Kochvorgangs, des Ausblasens, der Stoffwäsche und gegebenenfalls der Bleiche, mit einer mehrfachen thermischen Behandlung der Ablauge zur Rückgewinnung der Aufschlußchemikalien unter Verwendung einer wasserlöslichen Monosulfitlösung mit einem Zusatz von Methanol als mindestens ein niedrig siedendes, organisches

7

Lösungsmittel und einem Chinonderivat als mindestens eine als Redoxkatalysator geeignete Verbindung, dadurch gekennzeichnet, daß für den Aufschluß entsprechende Karbonate und/oder Hydroxide bei überwiegendem Anteil an Monosulfitlösung zugesetzt werden.

2. Verfahren nach Anspruch 1, dadurch gekennzeichnet, daß bezogen auf das trockene Pflanzenrohmaterial 10-60 %, vorzugsweise 15-30 %, niedrig siedende organische Lösungsmittel in der Aufschlußlösung eingesetzt werden.

3. Verfahren nach Anspruch 1 oder 2, dadurch gekennzeichnet, daß als Redoxkatalysator Anthrachinon oder Anthrahydrochinon der Aufschlußlösung zugesetzt wird.

4. Verfahren nach Anspruch 2 oder 3, dadurch gekennzeichnet, daß auf das eingesetzte trockene Pflanzenmaterial bezogen ein Anteil von 0,05 bis 0,5 % insbesondere von 0,1 % des Chinonderivats der Aufschlußlösung zugesetzt wird.

5. Verfahren nach Anspruch 1 oder folgenden, dadurch gekennzeichnet, daß das Verhältnis des trockenen Pflanzenmaterials zur Gesamtaufschlußlösung zwischen 1 : 2 bis 1 : 8 gewählt wird.

6. Verfahren nach Anspruch 5, dadurch gekennzeichnet, daß die maximale Aufschlußtemperatur zwischen 160 und 190 °C und der Druck im Bereich zwischen 8 und 16 bar eingestellt wird.

7. Verfahren nach Anspruch 6, dadurch gekennzeichnet, daß die Aufschlußdauer im Bereich zwischen 30 und 240 Minuten eingestellt wird.

8. Verfahren nach Anspruch 1, dadurch gekennzeichnet, daß organische Lösungsmittel aus dem Kochvorgang und/oder aus der Eindampfung der Ablauge abgetrennt und zur Bereitung frischer Aufschlußlösung rückgeführt werden, die Ablauge zur Dicklauge eingedampft und anschließend diese in reduzierender Atmosphäre thermisch abgebaut wird, ferner daß das Alkalikarbonat aus dem festen Rückstand des thermischen Abbaus herausgelöst und mit dem zu Schwefeldioxid umgewandelten Schwefelwasserstoff aus den Abgasen des thermischen Abbaus sulfitiert sowie das Alkalisulfit zur erneuten Bereitung der Aufschlußlösung unter Zusatz der Chemikalienverluste in den Kochvorgang rückgeführt wird.

9. Verfahren nach Anspruch 8, dadurch gekennzeichnet, daß aus dem festen Rückstand des thermischen Abbaus mittels Wasser die Alkalikarbonate herausgelöst werden.

10. Verfahren nach Anspruch 9, dadurch gekennzeichnet, daß der Anteil des Kohlenstoffes des festen Rückstandes durch Filtration abgetrennt und der Oxidation der Schwefelverbindungen in den Abgasen des thermischen Abbaus als Brennstoff zugeleitet wird.

11. Verfahren nach Anspruch 9, dadurch gekennzeichnet, daß der Anteil des Kohlenstoffes des festen Rückstandes als Belebungshilfsmittel und Adsorbens der biologischen Klärung der Bleichereiabwässer zugeleitet wird.

12. Verfahren nach Anspruch 10 oder 11, dadurch gezeichnet, daß der thermische Abbau der Kochlauge mehrstufig in reduzierender Atmosphäre durchgeführt und die gebildeten festen Produkte in der oder den ersten Stufen laufend von den wärmeübertragenden Flächen des Reaktors abgetragen und in den nachfolgenden Stufen zerkleinert werden.

13. Verfahren nach Anspruch 12, dadurch gekennzeichnet daß der thermische Abbau der Kochlauge unter indirekter Beheizung mit im wesentlichen horizontalem Stoffstrom sowie hierzu rechtwinkliger Teilkomponente für eine Umschichtung der Feststoffe vorgenommen wird.

14. Verfahren nach Anspruch 13, dadurch gekennzeichnet, daß der thermische Abbau in reduzierender Atmosphäre bei Temperaturen zwischen 500 und 850 °C über eine Verweilzeit zwischen 30 und 120 Minuten vorgenommen wird.

15. Verfahren nach Anspruch 8, dadurch gekennzeichnet, daß für die Verdünnung des Stoffes nach Abschluß des Kochvorgangs Bleichereiabwässer aus der oder den Stufen zugeleitet wird, deren Base mit derjenigen der Aufschlußlösung des Kochvorgangs übereinstimmt sowie chlorfrei sind und ferner, daß die Bleichereiabwässer der oder der den ersten Stufen folgenden in Reihe einer biologischen Klärung und der hierbei erhaltene eingedickte Klärschlamm nachfolgend dem thermischen Abbau der Kochlauge zugeleitet wird.

## Claims

1. Sulfite pulping process for the production of cellulose from materials containing lignocellulose with recovery of the pulping chemicals, with the cooking, blowing, washing, and in some cases bleaching, performed in series, with a multiple thermal treatment of the black liquor for recovery of the pulping chemicals, with the use of a water-soluble monosulfite solution with menthanol added as at least one low-boiling organic solvent and a quinone derivative as at least one compound appropriate as a redox catalyst, characterized in that for pulping appropriate carbonates and/or hydroxides with a predominant percentage of monosulfite solution are added.

2. Method in accordance with claim 1, characterized in that, with respect to the dry plant raw material, 10 to 60 %, preferably 15 to 30 %, of low-boiling organic solvents are added in the pulping liquor.

3. Method in accordance with claim 1 or 2, characterized in that anthraquinone or anthrahydroquinone is added as redox catalyst to the pulping liquor.

4. Method in accordance with claim 2 or 3, characterized in that a proportion of 0.05 to 0.5 %, in particular of 0.1 %, with respect to the dry plant material used, is added to the pulping liquor.

5. Method in accordance with claim 1 or the succeeding claims, characterized in that the ratio of the dry plant material to the total pulping liquor varies from 1 : 2 to 1 : 8.

6. Method in accordance with claim 5, characterized in that the maximum digestion temperature is adjusted from 160 to 190° and the pressure in the range of 8 to 16 bar.

7. Method in accordance with claim 6, characterized in that the cooking time is in the range of 30 to 240 minutes.

8. Method in accordance with claim 1, characterized in that organic solvents are separated from the digester and/or from the evaporation of the black liquor and recycled for the preparation of fresh cooking liquor, the black liquor is evaporated to concentrated liquor and then the latter is thermically degraded in a reducing atmosphere, also in that the alkali carbonat is dissolved from the solid residue of the thermal degradation product and sulfited with the sulfur dioxide, converted from hydrogen sulfide, from the exhaust gases of the thermal degradation, and the alkali sulfite is recycled to the cooking process for the new preparation of the pulping liquor including the makeup of the chemical losses.

9. Method in accordance with the claim 8, characterized in that the alkali carbonates are dissolved with water from the solid residue of the thermal degradation.

10. Method in accordance with claim 9, characterized in that the carbon content of the solid residue is separated by filtration and delivered as fuel for the oxidation of the sulfur compounds in the exhaust gases from the thermal degradation.

11. Method in accordance with claim 9, characterized in that the carbon content in the solid residue is delivered as activating agent and adsorbent in the biological clarification of the bleach plant effluents.

12. Method in accordance with claim 10 or 11, characterized in that the thermal degradation of the cooking liquor is performed in steps in a reducing atmosphere and the solid products formed are continuously removed from the heat-transferring surfaces of the reactor in the first or stages and comminuted in the subsequent stages.

13. Method in accordance with claim 12, characterized in that the thermal degradation of the cooking liquor is performed by indirect heating with a substantially horizontal substance stream as well as a component at right angles thereto for a turning over the solids.

14. Method in accordance with claim 13, characterized in that the thermal degradation is performed in a reducing atmosphere at temperatures between 500 and 850 °C for a period between 30 and 120 minutes.

15. Method in accordance with claim 8, characterized in that, for the dilution of the pulp after completion of the cooking process, bleach plant waste water from the stage or stages is recycled, which base is the same as that of the pulping liquor and is chlorine free, and furthermore that the bleach plant waste water of the stage or stages successively following the first stages is led to a biological clarification, and the concentrated sludge from the clarification is thereafter recycled to the pulping liquor thermal degradation.

## Revendications

1. Procédé d'attaque au sulfite pour la fabrication de cellulose à partir de matières lignocellulosiques avec récupération des produits chimiques d'attaque, avec exécution en série des opérations de cuisson, de soufflage, de lavage de la pâte et le cas échéant de blanchîment, traitement thermique répété des liqueurs résiduaires pour récupération des produits chimiques d'attaque, avec utilisation d'une solution de monosulfite soluble dans l'eau additionnée au moins de méthanol en tant que solvant organique à bas point d'ébullition et au moins d'un dérivé de la quinone en tant que composé convenant en tant que catalyseur rédox, caractérisé par le fait que les carbonates et/ou hydroxydes correspondant à l'attaque sont ajoutés en proportion prépondérante de solution de monosulfite.

2. Procédé selon la revendication 1, caractérisé par le fait que l'on utilise dans la solution d'attaque, par rapport à la matière première végétale sèche, de 10 à 60 %, de préférence de 15 à 30 % de solvants organiques à bas point d'ébullition.

3. Procédé selon la revendication 1 ou 2, caractérisé par le fait que l'on ajoute à la solution d'attaque, en tant que catalyseur rédox, de l'anthraquinone ou de l'anthrahydroquinone.

4. Procédé selon la revendication 2 ou 3, caractérisé par le fait que l'on ajoute à la solution d'attaque, par rapport à la matière végétale sèche mise en œuvre, une proportion de 0,05 à 0,5 %, plus spécialement de 0,1 %, du dérivé de quinone.

5. Procédé selon la revendication 1 ou les revendications suivantes, caractérisé par le fait que l'on observe un rapport de 1 : 2 à 1 : 8 entre la matière végétale sèche et la solution d'attaque globale.

6. Procédé selon la revendication 5, caractérisé par le fait que l'on règle la température maximale d'attaque entre 160 et 190 °C et la pression dans l'intervalle de 8 à 16 bar.

7. Procédé selon la revendication 6, caractérisé par le fait que l'on règle la durée d'attaque dans l'intervalle de 30 à 240 minutes.

8. Procédé selon la revendication 1, caractérisé par le fait que les solvants organiques provenant de l'opération de cuisson et/ou de l'évaporation des liqueurs résiduaires sont séparés et recyclés pour la préparation de la solution d'attaque fraîche, les liqueurs résiduaires sont concentrées par évaporation en liqueur concentrée qui est ensuite soumise à décomposition à la chaleur en atmosphère réductrice, que le carbonate alcalin du résidu solide de la décomposition à la chaleur est extrait et sulfité par l'anhydride sulfureux obtenu par conversion de l'hydrogène sulfuré des gaz résiduaires de la décomposition à la chaleur, et le sulfite alcalin est recyclé à l'opération de cuisson, après régénération en fonction des pertes de produits chimiques, pour une nouvelle préparation de solution d'attaque.

9. Procédé selon la revendication 8, caractérisé par le fait que les carbonates alcalins du résidu solide de la décomposition à la chaleur sont extraits par l'eau.

10. Procédé selon la revendication 9, caractérisé par le fait que le carbone contenu dans le résidu solide est séparé par filtration et envoyé à l'oxydation des composés du soufre des gaz résiduaires de la décomposition à la chaleur, en tant que combustible.

11. Procédé selon la revendication 9, caractérisé par le fait que le carbone contenu dans le résidu solide est envoyé à la clarification biologique des eaux résiduaires de blanchîment en tant que produit auxiliaire de régénération et adsorbant.

12. Procédé selon la revendication 10 ou 11, caractérisé par le fait que la décomposition à la chaleur des liqueurs de cuisson est réalisée en plusieurs stades en atmosphère réductrice et les produits solides formés dans le ou les premiers stades sont raclés en continu des surfaces de transfert de chaleur du réacteur et broyés dans les stades suivants.

13. Procédé selon la revendication 12, caractérisé par le fait que la décomposition à la chaleur des liqueurs de cuisson est réalisée par chauffage indirect sur un courant de matière en principe horizontal comprenant des composants diviseurs perpendiculaires permettant une répartition des matières solides.

14. Procédé selon la revendication 13, caractérisé par le fait que la décomposition à la chaleur est effectuée en atmosphère réductrice à des températures de 500 à 850 °C avec une durée de passage de 30 à 120 minutes.

15. Procédé selon la revendication 8, caractérisé par le fait que, après la fin de l'opération de cuisson, pour diluer la pâte, on envoie des eaux résiduaires du blanchîment provenant du ou des stades opératoires dans lesquels les composants sont les mêmes que ceux de la solution d'attaque de l'opération de cuisson et qui sont exemptes de chlore, et que les eaux résiduaires du blanchîment du premier ou des premiers stades sont envoyées successivement à une clarification biologique, les boues de clarification concentrées ainsi obtenues étant ensuite envoyées à la décomposition à la chaleur des liqueurs de cuisson.

Hack-schnitzel • KOCHEREI disk./kont. ← Energie • 1 • Aufschlußlösung (20 25°/d bzg. atro Holz • STRIPPER • 4 • BLASTANK • 3 • H₂O • STOFF-WÄSCHE • 5 • SORTIERUNG • 7 • BLEICHEREI • 9 Zellstoff • NaOH Bleichchemikalien • KLÄR-ANLAGE (aerob)

NaOH • Anthrachinon • Abluft • SULFI-TIERUNG • 69 • Na₂SO₃ • Methanol • Methanol • Ablauge • EINDAMPFUNG • 63 • Energie • Klärschlamm • DREHROHR Karbonati-sierung • 65 • Energie • H₂S, N₂, CO₂, CO... • KESSEL Oxidation • Dampf • 651

H₂O • ENTLAUGUNG • 67 • Na₂CO₃ • fester Rück-stand • Kohlenstoff • SO₂ • C als Belebungshilfsmittel und Adsorbens

1